(19) Europäisches Patentamt
European Patent Office
Office européen des brevets

(11) **EP 3 721 330 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **18807900.8**

(22) Anmeldetag: **13.11.2018**

(51) Internationale Patentklassifikation (IPC):
***G06F 3/042*** (2006.01)

(52) Gemeinsame Patentklassifikation (CPC):
**G01C 25/00; G01C 11/06**

(86) Internationale Anmeldenummer:
**PCT/EP2018/081085**

(87) Internationale Veröffentlichungsnummer:
**WO 2019/110252 (13.06.2019 Gazette 2019/24)**

(54) **VERFAHREN UND SYSTEM ZUR BESTIMMUNG EINER POSITION EINES OBJEKTES**

METHOD AND SYSTEM FOR DETERMINING A POSITION OF AN OBJECT

PROCÉDÉ ET DISPOSITIF DE DÉTERMINATION D'UNE POSITION D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2017   DE 102017128698**

(43) Veröffentlichungstag der Anmeldung:
**14.10.2020   Patentblatt 2020/42**

(73) Patentinhaber: **Inpixon**
**Palo Alto, CA 94303 (US)**

(72) Erfinder:
- **BUCKO, Michal**
  **10967 Berlin (DE)**
- **VAHDAT-PAJOUH, Darius**
  **13357 Berlin (DE)**

(74) Vertreter: **Cohausz & Florack**
**Patent- & Rechtsanwälte**
**Partnerschaftsgesellschaft mbB**
**Postfach 10 18 30**
**40009 Düsseldorf (DE)**

(56) Entgegenhaltungen:
**EP-A2- 2 068 280     US-A1- 2014 043 444**
**US-B1- 6 876 762**

- **ANDREW D WILSON ET AL: "CrossMotion", MULTIMODAL INTERACTION, ACM, 2 PENN PLAZA, SUITE 701 NEW YORK NY 10121-0701 USA, 12 November 2014 (2014-11-12), pages 216 - 223, XP058061241, ISBN: 978-1-4503-2885-2, DOI: 10.1145/2663204.2663270**
- **"Advances in Theory and Applications of Stereo Vision", 8 January 2011, INTECH, ISBN: 978-953-30-7516-7, article JUNICHI YAMAGUCHI: "Three Dimensional Measurement Using Fisheye Stereo Vision", XP055540776, DOI: 10.5772/ 13028**
- **ABRAHAM S ET AL: "Fish-eye-stereo calibration and epipolar rectification", ISPRS JOURNAL OF PHOTOGRAMMETRY AND REMOTE SENSING, AMSTERDAM [U.A.] : ELSEVIER, AMSTERDAM, NL, vol. 59, no. 5, 1 August 2005 (2005-08-01), pages 278 - 288, XP027806733, ISSN: 0924-2716, [retrieved on 20050801]**

## EP 3 721 330 B1

**Beschreibung**

Der Gegenstand betrifft ein System sowie ein Verfahren zur Bestimmung einer Position eines Objektes in einem Raum, insbesondere einer Ebene eines Raumes. Das Verfahren als auch das System wird insbesondere zur Erkennung von Personen in Ladenlokalen verwendet.

Positionsbestimmung, insbesondere Indoor-Positionsbestimmung, ist hinlänglich bekannt. Es ist bekannt, mit Hilfe von Indoor-Positionsbestimmungsverfahren eine Position eines Objektes, beispielsweise eines mobilen Gerätes, in einem Raum zu bestimmen.

Darüber hinaus sind Innenraumüberwachungssysteme bekannt, die auf Basis von Kameras arbeiten. Die Kameras erfassen Bilder eines Raumes. In diesen Bildern können beispielsweise Objekte detektiert werden. Dies kann beispielsweise durch geeignete bildgebende Verfahren geschehen. Auch ist beispielsweise bekannt, Gesichter oder dergleichen in Bildern, beispielsweise Bewegtbildern, zu detektieren und auch die Bewegung der Objekte über eine Serie von Bildern zu tracken.

Bei den bekannten Verfahren zur Überwachung eines Raumes mit Hilfe von Kameras lässt sich jedoch nur eine Position des Objektes relativ zur Kamera ermitteln. Dies ist für Sicherheitsanwendungen ausreichend, kann jedoch nachteilig sein, wenn die Positionsinformation absolut sein muss, um beispielsweise Augmented Reality Anwendungen mit Positionsinformationen anzureichern.

Aus diesem Grunde lag dem Gegenstand die Aufgabe zugrunde, die Position eines Objektes in einem Raum exakt zu bestimmen.

Aus der US 2014/0043444 A1 ist ein Verfahren zur Kalibrierung von einer Stereo Kameraanordnung bekannt. Aus "CrossMotion: Fusing Device and Image Motion for User Identification, Tracking and Device Association" von A.D. Wilson und H. Benko ist ein Verfahren zur Bestimmung der Position eines Objektes unter Verwendung der Merkmale des Oberbegiffs von Anspruch 1 bekannt.

Diese Aufgabe wird durch ein Verfahren nach Anspruch 1 sowie ein System nach Anspruch 15 gelöst.

Es ist erkannt worden, dass unter Verwendung von Informationen zu Referenzpunkten und zweier Kameras eine Position eines Objektes in einer Ebene bestimmt werden kann. Eine Kamera ist insbesondere eine Bewegtbildkamera, beispielsweise eine CCD-Kamera oder eine CMOS Kamera.

Die Kamera ist insbesondere eine hochauflösende Kamera. Die Kamera hat insbesondere ein Weitwinkelobjektiv mit einem sehr großen Bildwinkel. Der Bildwinkel kann dabei bis zu 180° aufweisen. Die Kamera hat bevorzugt eine Auflösung von 4K.

Das Objektiv ist insbesondere ein Weitwinkelobjektiv oder ein Fischaugenobjektiv oder dergleichen.

Zur Positionsbestimmung wird zunächst jeweils ein Bild eines Raums durch zwei solcher Kameras erfasst. Die Kameras sind dabei bevorzugt zueinander zeitlich synchronisiert, d.h. dass die Kameras zumindest eine gleiche Zeitnormale haben. Das bedeutet, dass die Zeitstempel von gleichzeitig aufgenommenen Bildern der beiden Kameras einander zuordenbar, insbesondere gleich sind. Dadurch können jeweils zwei im Wesentlichen zeitgleich aufgenommene Bilder der beiden Kameras miteinander kombiniert werden.

Ein jeweiliges Bild ist eine Azimutalprojektion der Hemisphäre um die Kamera herum auf die Bildebene der Kamera. Mit Hilfe der Azimutalprojektion ist es möglich, die Objektkoordinate Azimut in eine Bildkoordinate Azimut zu überführen. Jeder Azimutwinkel des Objektbereichs kann aus einem Azimutwinkel in dem Bildbereich hergeleitet werden. Insbesondere werden die Objekte mit Hilfe der Kamera entsprechend ihrer Kugelkoordinaten auf der Hemisphäre erfasst und in kartesische Koordinaten in der Bildebene überführt.

Somit lässt sich aus jedem einzelnen Bild der Azimut des Objektes zu der jeweiligen Kamera ermitteln.

Mit Hilfe der Azimutalprojektion ist es auch möglich, die Objektkoordinate Polarwinkel in eine Bildkoordinate zu überführen. Jeder Polarwinkel des Objektbereichs kann aus einer Position (z.B. Radius oder Abstand zur Bildmitte) im Bildbereich hergeleitet werden. Insbesondere werden die Objekte mit Hilfe der Kamera entsprechend ihrer Kugelkoordinaten auf der Hemisphäre erfasst und in kartesische Koordinaten in der Bildebene überführt.

Somit lässt sich aus jedem einzelnen Bild der Polarwinkel des Objektes zu der jeweiligen Kamera ermitteln.

Nunmehr liegt für jede Kamera bzw. jedes Bild einer Kamera ein Azimut des Objektes und/oder ein Polarwinkel im Bildbereich vor. Die Position des Objektes kann dann anschließend bestimmt werden, in dem die bestimmten Azimute des Objektes und/oder Polarwinkel des Objektes zusammen mit einer Position von zumindest zwei zuvor bestimmten Referenzpunkten verwendet wird.

Die Referenzpunkte können beispielweise zwei zuvor ausgemessene Objekte sein. Zu diesen Objekten können beispielsweise die tatsächlichen Azimute und/oder Polarwinkel zur Bildachse der Kameras ausgemessen werden. Auch ist es möglich, den absoluten Abstand der Referenzpunkte zu der Bildachse der jeweiligen Kameras auszumessen.

Somit kann dem Azimut und/oder Polarwinkel in dem Bild eines Referenzpunktes eine absolute Position in dem Raum zugeordnet werden. Durch trigonometrische Herleitung kann dann anschließend die absolute Position des Objektes in dem Raum ausgehend zumindest von dem Azimut des Objektes in den beiden Bildebenen und den Positionen der Referenzpunkte in den Bildern, insbesondere deren Azimute, berechnet werden.

Um eine zweidimensionale Position des Objektes in dem Raum feststellen zu können, werden zwei Kameras benötigt. Bei einer Abbildung der Hemisphäre der Kamera auf die Bildebene wird ein Objekt, wenn es sich entlang einer Geraden zwischen Objekt und Kamera bewegt, stets den gleichen Azimut auf der Bildebene haben. Nur die Elevation (der Polarwinkel) wird sich ändern. Wird jedoch nur der Azimut ausgewertet, so ist das Bild einer einzigen Kamera nicht ausreichend, die Position des Objektes entlang dieser Geraden zu bestimmen. Durch die Verwendung des zweiten Bildes können die beiden Geraden entlang der beiden Azimute auf der Bildebene geschnitten werden, so dass sich eine Position in der Ebene des Objektes bestimmen lässt. Diese bestimmte Position kann dann verwendet werden, um unter zusätzlicher Verwendung der Informationen zu den Referenzpunkten die absolute Position des Objektes in der Ebene des Raumes zu bestimmen.

Wie bereits erwähnt, kann jedem Objekt, welches auf einem Meridian der Hemisphäre um die Kamera herum detektiert wurde, genau ein Azimut zugeordnet bekommen.

Die Referenzpunkte können als Normen einer Kalibrierung der Kamera verwendet werden. Somit ist es möglich, jede einzelne Kamera unter Verwendung der Referenzpunkte zu kalibrieren. Durch die absolute Bemaßung der Position des Referenzpunktes lässt sich auch die Position des Objektes absolut bemaßen, in dem das absolute Maß des Referenzpunktes, sein Azimut sowie der Azimut des Objektes in dem Bild und/oder sein Polarwinkel sowie der Polarwinkel des Objektes in dem Bild verwendet wird.

Die Azimutalprojektion ist insbesondere eine Zentralprojektion. Die Projektion kann gnomonisch, winkeltreu, äquidistant, flächentreu oder orthografisch sein. Bevorzugt lässt sich jedem Azimut der Bildebene ein Azimut der Objektebene zuordnen. Bevorzugt lässt sich jedem Polarwinkel der Bildebene ein Polarwinkel der Objektebene zuordnen.

Bei der Abbildung des Objektes auf die Bildebene wird ein Azimut der Objektkoordinaten in ein Azimut der Bildkoordinaten projiziert. Somit kann aus den Bildkoordinaten, insbesondere dem Azimut der Bildkoordinaten auf den Azimut der Objektkoordinaten geschlossen werden. Die Objektkoordinaten sind insbesondere Elevation und Azimut in der Objektebene. Die Bildkoordinaten sind ebenfalls bevorzugt Azimut und Elevation in der Bildebene. Die Abbildung ist bevorzugt derart, dass der Azimut der Objektebene gleich dem Azimut der Bildebene ist.

Erfindungsgemäß ist vorgesehen, dass die optische Achse beider Kameras im Wesentlichen parallel zur Flächennormale der Ebene ist, in der die Position des Objektes bestimmt wird. Die Bildebene ist im Wesentlichen parallel zu der Ebene, in der sich das Objekt bewegt und in der die Position des Objektes bestimmt wird.

Die Kameras sind bevorzugt an einer Decke des Raumes angeordnet. Dabei erfassen die Kameras bevorzugt einen Raumwinkel von mehre als 90°, insbesondere von bis zum 180°.

Es ist bevorzugt, wenn eine Gerade zwischen den Kameras als 0° Azimut für beide Kameras angenommen wird. Auch ist bevorzugt, wenn die Zählrichtung für den Azimut für die Kameras gleich ist.

Die Ebene, in der das Objekt sich befindet und in der die Position des Objektes bestimmt werden soll, ist bevorzugt durch zwei senkrecht zur optischen Achse der Kameras verlaufende Achsen aufgespannt. Insbesondere lässt sich die Ebene in einem orthogonalen Koordinatensystem beschreiben. Dabei können die Achsen, die zur Bemaßung der Position des Referenzpunktes verwendet werden, zueinander und zur optischen Achse der Kamera im Wesentlichen orthogonal sein. Insbesondere lässt sich der tatsächliche Abstand des Referenzpunktes zur optischen Achse der jeweiligen Kamera entlang dieser beiden Achsen bestimmen. Mit dieser Bemaßung lässt sich dann anschließend aus den bekannten Azimuten des Referenzpunktes und den Azimuten des Objektes die tatsächliche Position des Objektes in der Ebene berechnen.

Wie bereits erläutert, kann der Azimut eines Objektes in der Bildebene und somit auch der Objektebene bestimmt werden. Ein zwischen der optischen Achse oder dem Brennpunkt der Kamera und dem Objekt selbst aufgespannter Vektor hat den entsprechenden Azimut. Bewegt sich das Objekt nun entlang der Richtung des Vektors, verändert sich sein Azimut nicht. Daher kann mit nur einem Bild die Position des Objektes in der Ebene noch nicht bestimmt werden. Aus diesem Grunde wird vorgeschlagen, dass der Azimut des Objektes in Bildern von zumindest zwei Kameras bestimmt wird. Bevorzugt ist jedoch die Verwendung von mehr als zwei Kameras, beispielsweise von vier oder mehr Kameras. Je mehr Informationen vorliegen, desto genauer kann die Position bestimmt werden.

Durch die Auflösung der Kamera wird die Winkelauflösung bestimmt. Durch Verwendung von jeweils zweier Bildern zweier unterschiedlicher Kameras lässt sich jeweils eine Position des Objektes in dem Raum bestimmen, wobei diese Position abhängig von der Winkelauflösung ungenau ist. Unter Verwendung der ermittelten Positionen von zumindest zwei Kamerapaaren lässt sich die Position exakter bestimmen. Dabei können beispielsweise die berechneten Positionen gemittelt werden. So kann beispielsweise ein geometrisches oder ein quadratisches Mittel der errechneten Positionen bestimmt werden. Diese unterschiedliche Winkelauflösung kann darüber hinaus abhängig von den Polarwinkeln sein. Daher kann unter Verwendung der Polarwinkel eine Anpassung der Bestimmung der Position erfolgen, in dem eine Wichtung der gemessenen Azimute der Bilder mit Hilfe der bestimmten Polarwinkel erfolgt.

Gemäß einem Ausführungsbeispiel wird vorgeschlagen, dass ein Objektmittelpunkt bestimmt wird und dass die Position des Objektmittelpunkts bestimmt wird. Zur Bestimmung des Objektmittelpunkts kann beispielsweise ein Human Skeleton Modell verwendet werden. So sind z.B. sogenannte "Head Detection" Algorithmen bekannt, mit denen in einem Bild ein Kopf einer Person erkannt werden kann und ein Punkt auf dem erkannten Kopf kann als Objektmittelpunkt definiert sein. Auch kann beispielsweise ein Background Subtraction Verfahren werden. Bei beiden Modellen lässt sich der Mittelpunkt des erfassten Objekts rechnerisch bestimmen. Dieser Mittelpunkt dient zur Bestimmung der Position des Objektes.

Wie erläutert, ist erkannt worden, dass die Genauigkeit der Objekterkennung abhängig vom Polarwinkel des Objektes, also dem Abstand des Objektes zu der Kamera, sein kann. Ein Objekt wird insbesondere über die gerade genannten Objekterkennungsverfahren erkannt, wobei hierbei insbesondere ein Objektmittelpunkt bestimmt wird. Je weiter das Objekt von der Kamera entfernt ist, desto ungenauer ist die Erkennung des Objektes. Die Entfernung des Objektes ist abhängig vom Polarwinkel in dem das Objekt erkannt wird.

Dieser Erkenntnis kann wie folgt Rechnung getragen werden. Aus einer Position eines Objektes (Objektmittelpunktes) in einem Bild kann sowohl sein Azimut als auch sein Polarwinkel abgeleitet werden. Dies ist lediglich eine Frage der Abbildungsfunktion. Z.B. stellt ein Azimut im Bild den Azimut im Raum dar und ein Abstand des Objektes von einem Bildmittelpunkt den Polarwinkel.

Wie bereits erläutert, kann von der Kamera aus, insbesondere ausgehend vom Kameramittelpunkt, in Richtung des Objektmittelpunktes ein Vektor bestimmt werden. Sind nun Azimut und Elevation (Polarwinkel) eines Objektes bekannt, kann ein dimensionsloser Raumvektor bestimmt werden, der sich vom Kameramittelpunkt in Richtung des Azimutwinkels und des Polarwinkels erstreckt. Jeder Vektor hat eine Wurzel, deren Position aus der Position der Kamera bekannt ist. Die Abstände und Winkel der Kameras zueinander sind bekannt, so dass der Verlauf der Vektoren im Raum bestimmt werden kann.

Für jede von zumindest zwei Kameras wird nunmehr ein solcher Vektor für jedes erkannte Objekt bestimmt. Ob tatsächlich ein Objekt erkannt wurde, ist abhängig davon, ob dieses Objekt von zwei Kameras gleichzeitig erfasst wurde, also ob die Vektoren sich schneiden oder nahekommen. Anders als ein zwei Vektoren, die nur in einer Ebene verlaufen, so wie dies bei Vektoren der Fall ist, die in der Ebene der Kamera verlaufen und nur in Richtung des bestimmten Azimuts verlaufen, schneiden sich zwei Raumwinkel in der Regeln nicht.

Um festzustellen, ob sich die Vektoren schneiden oder einander nahekommen, wird um den jeweiligen Vektor ein virtueller Zylinder gelegt. Der Radius dieses Zylinders ist abhängig von dem Polarwinkel des Vektors. Dabei kann diese Abhängigkeit reziprok sein, so dass bei kleinen Polarwinkeln große Radien angenommen werden und umgekehrt. Diese Annahme der Radien ergibt sich aus der Erkenntnis, dass die Entfernung des Objektes abhängig vom Polarwinkel ist, in dem das Objekt erkannt wird. Die Auflösung in der Bildebene ist mit kleinerem Polarwinkel größer, d.h. dass die Genauigkeit der Objekterkennung in Bereichen mit kleinen Polarwinkeln besser ist als in Bereichen mit großen Polarwinkeln.

Anschließend wird ermittelt, ob sich die Vektoren und/oder ihre Zylinder im Raum schneiden. Hierfür kann z.B. der Abstand der beiden Vektoren zueinander entlang ihrer Ausbreitungsrichtung ermittelt werden. Insbesondere kann der minimale Abstand der Vektoren zueinander bestimmt werden. Der so bestimmte minimale Abstand der Vektoren zueinander kann in ein Verhältnis zu den Radien der Zylinder gesetzt werden. So kann z.B. die Summe der beiden Radien bestimmt werden und mit dem minimalen Abstand der Vektoren verglichen werden. Schneiden sich die Zylinder, so wird der minimale Abstand der Vektoren kleiner sein als die Summe der Radien. Daher wird geprüft, ob der minimale Abstand der Vektoren kleiner sein als die Summe der Radien. Ist dies der Fall, schneiden sich die Zylinder im Raum.

Der minimale Abstand der Vektoren kann durch einen Abstandsvektor bestimmt sein, welcher bevorzugt senkrecht auf zumindest einem der Vektoren steht. Der Abstandsvektor hat eine Länge, die dem Betrag des minimalen Abstands der Vektoren entspricht.

Da nun derjenige Vektor eine höhere Genauigkeit der Objekterkennung hat, dessen Polarwinkel am größten ist, wird nunmehr der Abstandsvektor oder der Betrag des Abstandsvektors abhängig von den Polarwinkeln der beiden Vektoren unterteilt. Dabei wird der Abstandsvektor bevorzugt proportional zu den Polarwinkeln, respektive den Radien der Zylinder unterteilt. Der Quotient zwischen dem größeren Polarwinkel im Zähler und der Summe der Polarwinkel im Nenner ist ein Maß für die Unterteilung des Abstandsvektors. Der Abstandsvektor kann abhängig von diesem Quotienten in zwei Abschnitte eingeteilt werden welche durch einen Punkt getrennt sind. Dieser Punkt auf dem Abstandsvektor verschiebt sich in Richtung desjenigen Vektors, der den größeren Polarwinkel hat. Dieser Punkt wird als Objektmittelpunkt des Objektes angenommen.

Darüber hinaus ist erkannt worden, dass in einem jeweiligen Bild mehr als ein Objekt vorhanden sein kann. In der Regel möchte man jedem einzelnen Objekt seine Position zuordnen können. Wenn ein Objekt beispielsweise eine Person ist, kann diese Person ein Mobilgerät mit sich führen. Unter Verwendung des Mobilgerätes kann es möglich sein, eines unter einer Vielzahl von Objekten in den Bildern zu identifizieren.

Beispielsweise ist es möglich, dass auf einem Mobilgerät eine Anwendung installiert ist, die mit einem Zentralrechner und/oder den Kameras in Kommunikationsverbindung steht und Informationen zur Positionsbestimmung austauscht. So ist es beispielsweise möglich, dass ein Mobilgerät seine Beschleunigungsinformationen aussendet. Der Zentralrechner und/oder die Kamera können Beschleunigungsinformationen von dem Mobilgerät empfangen. Die Beschleunigungsinformationen des Mobilgeräts könne korreliert werden mit Bewegungsinformationen der Bilder. Werden diese Informationen korreliert, insbesondere wird eine Kreuzkorrelation durchgeführt, so kann beispielsweise detektiert werden, welche Bewegungsinformationen des Mobilgeräts mit Bewegungsinformationen von welchem Objekt in dem Bild am besten korrelieren. Dann kann dieses Objekt, welches die höchste Korrelation hinsichtlich der Bewegungsinformationen mit denen des Mobilgeräts hat, als das Objekt identifiziert werden, dessen Position bestimmt werden soll. In diesem Zusammenhang sei erwähnt, dass Beschleunigungsinformationen als Bewegungsinformationen aufgefasst werden können und umgekehrt.

Erfindungsgemäß ist vorgesehen zumindest zwei Objekte in den jeweiligen Bildern der Kamera zu detektieren. Anschließend werden Bewegungsinformationen der Objekte aus den Bildern ermittelt. Diese Bewegungsinformationen können mit Zeitstempeln versehen sein. Wenn darüber hinaus Bewegungsinformationen von mobilen Geräten empfangen werden, die ebenfalls mit Zeitstempeln versehen sind, so kann eine zeitliche Korrelation der Bewegungsinformationen aus den Bildern von den unterschiedlichen Objekten mit Bewegungsinformationen der mobilen Geräte von unterschiedlichen Objekten durchgeführt werden. Durch Kreuzkorrelation dieser Bewegungsinformationen lässt sich jeweils ein Objekt in dem Bild einem Objekt mit einem jeweiligen Mobilgerät zuordnen. Somit kann dasjenige Objekt in dem Bild bestimmt werden, von dem die Bewegungsinformationen empfangen wurden.

An dem Objekt ist ein mobiles Gerät angeordnet sein. Das mobile Gerät kann beispielsweise ein mobiler Computer, ein Telefon, ein Smartphone, ein Tabletcomputer, ein PDA, eine Datenbrille, ein Headset oder dergleichen sein. Mit Hilfe des mobilen Gerätes bzw. darin angeordneten Accelerometern und/oder Gyroskopen lassen sich Bewegungsinformationen erfassen. Die erfassten Bewegungsinformationen können beispielsweise mit Zeitstempel versehen, versendet werden. Insbesondere ist eine Synchronisation der Zeit zwischen dem mobilen Gerät bzw. dem Anwendungsprogramm auf dem mobilen Gerät und den Kameras und/oder dem Zentralrechner über die Kommunikationsverbindung vorteilhaft, um eine gleiche Zeitnormale für die Zeitstempel auf dem mobilen Gerät und den Kameras und/oder dem Zentralrechner zu etablieren. Diese Zeitnormale kann für die Erstellung der Zeitstempel verwendet werden.

Diese Bewegungsinformationen werden anschließend zentral oder in einer jeweiligen Kamera oder in einer oder einigen der Kameras empfangen und ausgewertet, um ein Objekt zu bestimmen, an dem ein jeweiliges mobiles Gerät angeordnet ist. Dadurch erfolgt eine Zuordnung zwischen einem mobilen Gerät an einem Objekt und einem Bild des Objektes.

Zur Eingrenzung eines Suchbereichs in einem Bild kann es sinnvoll sein, zunächst mit dem mobilen Gerät einen Ortsbereich zu bestimmen. Ein Ortsbereich kann eine ungefähre Position oder eine Fläche in der Ebene sein. Mit Hilfe des mobilen Gerätes lässt sich durch bekannte Innenraumpositionierungsverfahren, beispielsweise unter Verwendung von RFID Beacons oder dergleichen, eine ungefähre Position des mobilen Gerätes in dem Raum bestimmen. Um diese ungefähre Position herum kann ein Umkreis berechnet werden, in dem das mobile Gerät seinen Aufenthaltsort haben kann. Dieser Ortsbereich kann ausgesendet und empfangen werden. Der empfangene Ortsbereich wird verwendet, um in dem Bild eine genauere Positionsbestimmung durchzuführen. Ist der Ortsbereich bekannt, so kann daraus beispielsweise ein Azimutbereich für jedes Bild bestimmt werden. Anschließend kann nur in diesem Azimutbereich nach Objekten gesucht werden, insbesondere wie dies oben beschrieben wurde.

Darüber hinaus kann, was eigenständig erfinderisch ist und mit allen hier beschriebenen Merkmalen einzeln oder in Kombination kombiniert werden kann, eine Zuordnung zwischen einem Objekt in dem Bild und einem Objekt in der Ebene durch Verwendung von Lichtinformationen erfolgen. Dabei kann an dem Objekt ein mobiles Gerät angeordnet sein, auf dem eine Anwendung installiert ist. Diese Anwendung kann zu einer definierten Zeit, die beispielsweise von einer Zentrale und/oder zumindest einer der Kameras bestimmt wird, ein Lichtsignal ausgesendet werden. Ein Lichtsignal kann beispielsweise das Aktivieren und Deaktivieren des Blitzlichts bzw. der Blitz LED des mobilen Gerätes sein. Auch kann die Helligkeit eines Displays des mobilen Gerätes variiert werden. Hierbei kann eine Modulation der Information, z.B. Pulsweitenmodulation durchgeführt werden. Zu der bestimmten Zeit kann in dem Bild einer jeden Kamera nach Variationen der Lichtstärke von Objekten gesucht werden. Ist die Variation des Lichts moduliert so können verschiedene Objekte voneinander in dem Bild diskriminiert werden. Wird in dem Bild ein bestimmtes Muster der Lichtvariation detektiert, kann das in diesem Bereich angeordnete Objekt dem Objekt zugeordnet werden, welches das mobile Gerät mit sich führt, welches gerade diese Modulation des Lichts durchführt.

Zur weiteren Verwendung der Positionsinformation wird vorgeschlagen, dass die Position des Objektes, welche zuvor bestimmt wurde, an das mobile Gerät, was an dem jeweiligen Objekt angeordnet ist, gesendet wird. In dem mobilen Gerät kann beispielsweise eine Augmented Reality Applikation laufen, die unter Verwendung der empfangenen Position Bildinformationen, welche mit einer Kamera des mobilen Geräts erfasst wurden, um Zusatzinformationen anreichert. Diese Zusatzinformationen können ortsabhängig sein, so dass gerade eine genaue Positionsbestimmung wichtig ist. Je genauer eine Position bestimmt wurde, desto detaillierter kann eine Zusatzinformation sein. Insbesondere im Bereich des Retails kann bei einer sehr genauen Positionsbestimmung, die eine Auflösung von weniger als 5cm hat, eine genaue Produktinformation zu einem gerade betrachteten Produkt angezeigt werden.

Ein weiterer Aspekt ist ein System zur Bestimmung der Position mit zwei Kameras, einer Auswerteeinrichtung und einer Zuordnungseinrichtung, die entsprechend des oben beschriebenen Verfahrens arbeitet.

Insbesondere die Auswertung und/oder die Zuordnung kann dabei entweder in einer der Kameras, in mehreren der Kameras oder in einem zentralen Rechner erfolgen. So ist es beispielsweise möglich, dass die jeweiligen Kameras ihre Bildinformationen an einen zentralen Rechner senden und der zentrale Rechner die empfangenen Bildinformationen entsprechend dem oben beschriebenen auswertet. Auch ist es möglich, dass die Kameras jeweils für sich die Positionsbestimmung durchführen und lediglich Koordinaten an einen zentralen Rechner senden. Auch können die Kameras z.B. den Azimut und/oder Polarwinkel eines Objektes übermitteln und der zentrale Rechner hieraus die Position, wie oben beschrieben, berechnen.

Auch ist es möglich und eigenständig erfinderisch, dass zunächst eine Kalibrierung des Systems derart durchgeführt wird, dass jedem Objekt eine Winkelposition zugeordnet wird. Dabei kann beispielsweise ein mobiles Gerät räumlich an ein Objekt gehalten werden. Zu diesem Zeitpunkt wird eine Objektkennung erfasst. Gleichzeitig erfassen die zumindest zwei Kameras, wie oben beschrieben, den Azimut und/oder Polarwinkel des Objektes bzw. des mobilen Gerätes. Somit liegt für jede Kamera jeweils ein Azimut und/oder eine Elevation für jedes Objekt vor. Diese zumindest zwei Azimute und/oder Elevationen für ein Objekt werden verknüpft mit der Objektkennung. Das Objekt kann beispielsweise ein Handelsprodukt sein.

Anschließend kann das oben beschriebene Verfahren durchgeführt werden, wobei dann jedoch nicht mehr die Position von zumindest zwei zuvor bestimmten Referenzpunkten verwendet wird. Vielmehr erfolgt die Zuordnung abhängig von den beiden Azimuten und/oder Polarwinkeln zu einem bestimmten Objekt. Dabei kann ausgewertet werden, welche beiden Azimute und/oder Polarwinkeln des Objekts, das mit dem Kameras erfasst wurden, zu den Azimuten und/oder Polarwinkeln von welchem Objekt am besten passen und die entsprechenden Objektkennungen bestimmt werden. Wenn dann jedem Objekt eine bestimmte Position zugeordnet ist, kann die Position genau bestimmt werden.

Im Bereich des Retails ist ein Shopfloor in der Regel exakt ausgemessen und jedes Produkt ist mit einer Produktkennung und Informationen zu seiner absoluten Position in dem Ladenlokal also in der zu überwachenden Ebene gespeichert. Ist die Objektkennung bekannt, so kann daraus die absolute Position bestimmt werden.

Nachfolgend wird der Gegenstand anhand einer Ausführungsbeispiele zeigenden Zeichnung näher erläutert. In der Zeichnung zeigen:

Fig. 1a      eine beispielhafte Hemisphäre um eine Kameralinse;

Fig. 1b      eine Abbildung der Objektebene in einer Bildebene;

Fig. 2      eine Anordnung von Kamera relativ zu einer Ebene, in der sich ein Objekt bewegt;

Fig. 3      eine Anordnung zur Durchführung des gegenständlichen Verfahrens;

Fig. 4a-c      eine schematische Darstellung der Positionsbestimmung anhand der bestimmten Azimute;

Fig. 5      ein Objekt in einem Raum;

Fig. 6      eine Kommunikation zwischen einem Mobilgerät und einer Zentrale;

Fig. 7      ein Ablauf eines gegenständlichen Verfahrens.

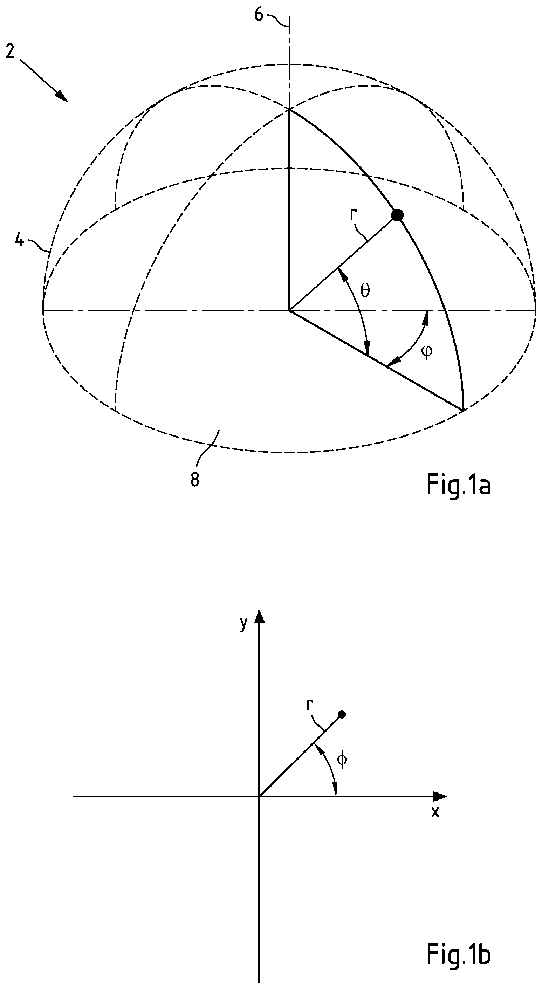

Fig. 1a zeigt zunächst eine theoretische Grundlage, auf der die Beschreibung aufgebaut ist. Um eine Kamera herum kann eine Hemisphäre 2 aufgespannt sein. Großkreise auf der Hemisphäre 2 bilden Meridiane 4. Jedem Meridian 4 ist ein Azimut $\varphi$ zugeordnet. Der Abstand eines Objektes von einer Kamera kann durch r angegeben werden und die Elevation durch $\theta$.

Eine Bildachse 6 der Kamera verläuft senkrecht zu einer Äquatorebene 8. Wesentlich für die nachfolgende Betrachtung ist die Abbildung des Azimuts $\varphi$ in einer Bildebene. Die Bildebene ist dabei bevorzugt parallel zur Äquatorebene 8. Eine Abbildung der Polarkoordinaten in Bildkoordinaten ist in der Fig. 1b dargestellt. Zu erkennen ist, dass der Azimut $\varphi$ in der Objektebene durch den Azimut $\Phi$ in der Bildebene dargestellt werden kann. In der Projektion kann die Elevation $\theta$ durch den Radius r repräsentiert sein.

Vorzugsweise wird die Objektebene auf der Hemisphäre 4 in eine Bildebene durch eine Zentralprojektion abgebildet. Dabei erfolgt insbesondere eine solche Abbildung, dass der Azimut $\varphi$ in der Objektebene dem Azimut $\Phi$ in der Bildebene entspricht. Dies kann als azimutale Abbildung verstanden werden. Eine durch eine Optik geringfügig abweichende Abbildung wird weiterhin als azimutale Abbildung verstanden. So kann es zu Verzerrungen an den Bildrändern kommen.

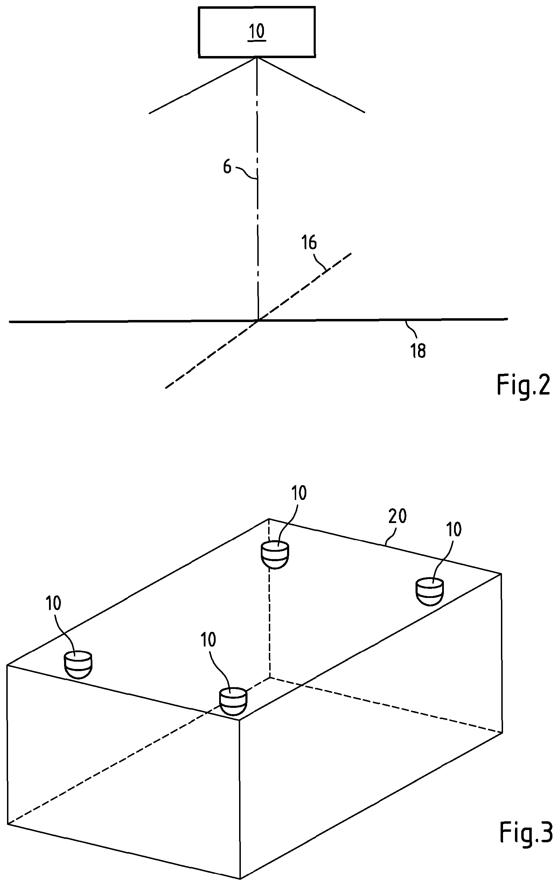

Fig. 2 zeigt eine Kamera 10 mit einem Bildwinkel 14. Der Bildwinkel 14 ist bevorzugt zwischen 90 und 180°. Dieser Bildwinkel ist bevorzugt in einem Winkel zwischen 180° und 360° um die optische Achse 6 herum aufgespannt.

Somit bietet die Kamera 10 einen Rundumblick oder einen 180° Blick in Richtung der Bildebene.

Die Kamera 10 ist eine Weitwinkelkamera oder eine Fischaugenkamera und ermöglicht eine azimutale Abbildung der Objektebene in eine Bildebene. Die Kamera 10 ist mit ihrer optischen Achse 6 parallel zu einer Flächennormale, welche von den kartesischen Achsen 16 und 18 aufgespannt wird. Die Achsen 16, 18 spannen die Ebene auf, in der die Position des Objektes bestimmt wird.

Fig. 3 zeigt einen Raum 20, an dessen Decke vier Kameras 10 angeordnet sind. Die Anzahl der Kameras kann sich aus der Größe eines Raums 20 bestimmen. Insbesondere sind die Kameras 10 äquidistant zueinander angeordnet und bilden dabei ein Netz von Kameras. Der Abstand von zwei Kameras zueinander kann beispielsweise jeweils 10m in Richtung der jeweiligen Achsen 16 und 18 sein. Somit kann mit 16 Kameras beispielsweise eine Fläche von ca. 2.500m$^2$ abgedeckt werden. Der Abstand eines Objektes in der durch die Achsen 16 und 18 aufgespannten Ebene bei einem Netz von Kameras, welche 10x10 Meter voneinander beabstandet sind, von einer optischen Achse 6 ist maximal ungefähr 7m. Bei einer Auflösung von 4K der Kamera 10 kann mit jedem Pixel eine räumliche Auflösung mit einer Unschärfe von 2,1cm erreicht werden.

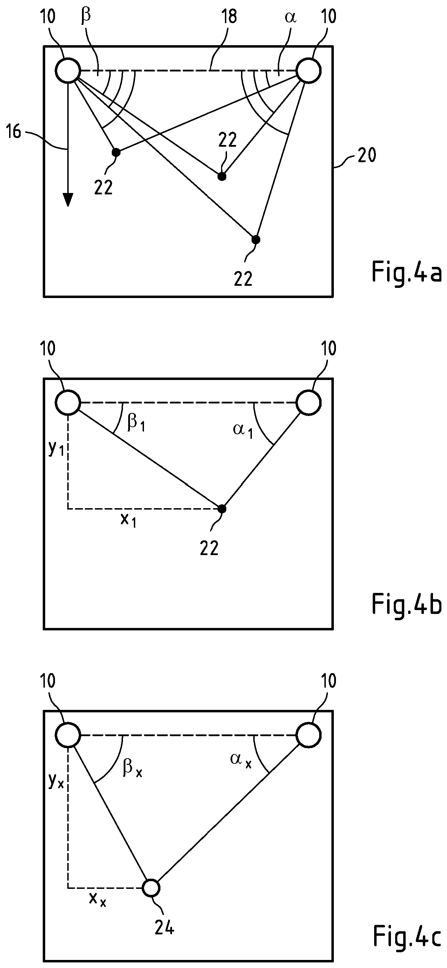

Fig. 4 zeigt schematisch, wie eine Positionsbestimmung erfolgen kann. Zunächst sind die Kameras 10 in dem Raum 20 dargestellt, die Darstellung ist eine Normalprojektion auf die durch die Achsen 16 und 18 aufgespannte Ebene in dem Raum 20. Diese Ebene kann als Objektebene verstanden werden.

Die Achse 18 ist insbesondere eine Gerade zwischen den Kameras 10. Entlang der Achse 18 kann für jede Kamera 10 ein Azimut von null Grad angenommen werden.

Zunächst können Referenzpunkte 22 durch die Kameras 18 vermessen werden. Jedem Referenzpunkt 22 kann jeweils ein Azimut $\alpha$ bzw. $\beta$ für jede der Kameras 10 zugeordnet werden. Ferner kann für jeden Referenzpunkt 22 ein Maß entlang der Achse 16 ($y_1$) und ein Maß entlang der Achse 18 ($x_1$) zugewiesen werden, wie in Fig. 4b gezeigt.

Dieses Maß kann eine absolute Entfernung eines Referenzpunkts 22 von der optischen Achse 6 einer jeden Kamera 10 sein. Der Abstand der Kameras zueinander kann bekannt sein, so dass das Maß entlang der Achse 18 den Abstand zwischen den Kameras 10 in zwei Längenmaße unterteilt. Fig. 4b zeigt beispielsweise für einen Referenzpunkt 22 die erfassten Azimute $\alpha_1$, $\beta_1$ einer jeden Kamera 10 sowie die Abstände $x_1$, $y_1$ des Referenzpunkts 22 von einer der Kameras 10.

Wird nun ein Objekt 24 in dem Bild der Kameras 10 detektiert, wie dies in Fig. 4c dargestellt ist, so kann an jeder der Kameras 10 ein Azimut $\alpha_x$, $\beta_x$ für dieses Objekt 24 bestimmt werden. Für eine Positionsbestimmung kann aus diesen bekannten Azimuten $\alpha_x$, $\beta_x$ das Maß für $x_x$ und $y_x$, welches entlang der Achsen 18 respektive 16 gemessen werden kann, bestimmt werden. Hierzu kann mittels trigonometrischer Umformung, wie in den Formeln (2), (4) und (6) gezeigt, ein Maß für $y_x$ und $x_x$ bestimmt werden.

$$y_x = x_x \tan \alpha_x \qquad (2)$$

$$\tau_1 = \frac{\alpha_1}{\beta_1} \qquad \tau_2 = \frac{\alpha_x}{\beta_x} \qquad (4)$$

$$x_x = x_1 \frac{1 + \dfrac{\tan \alpha_1}{\tan \beta_1}}{1 + \dfrac{\tan \alpha_x}{\tan \beta_x}} = \frac{1 + \tau_1 - \dfrac{\tau_1^3}{3} + \dfrac{2\tau_1^5}{15} \dots}{1 + \tau_{21} - \dfrac{\tau_2^3}{3} + \dfrac{2\tau_2^5}{15} \dots} \qquad (6)$$

Dabei ist $x_x$ abhängig von $x_1$, $\alpha_1$ und $\beta_1$ und kann z.B. durch eine Taylorreihenentwicklung abgeschätzt werden. Andere Reihenentwicklungen sind ebenfalls möglich. Ausgehend von dem bestimmten $x_x$ lässt sich auch $y_x$ bestimmen. Ist der Abstand zwischen den Kameras bekannt, so lässt sich auch der Abstand des Objektes 24 von der zweiten Kamera bestimmen.

Wie gezeigt lässt sich anhand der Azimute $\alpha_x$, $\beta_x$ sowie der Azimute $\alpha_1$, $\beta_1$ des Referenzpunktes 22 als auch der Maße $x_1$, $y_1$ des Referenzpunktes 22 die Maße für $x_x$ und $y_x$ der Objektes 24 errechnen. Somit ist es möglich, mit Bildern zweier Kameras eine Position eines Objektes in einem Raum zu bestimmen.

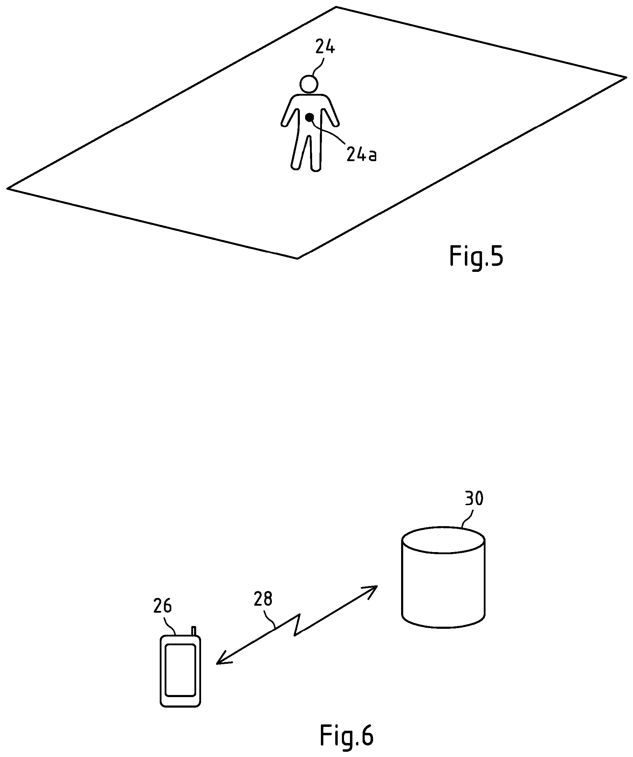

Ein Objekt 24 in einem Raum ist schematisch in Fig. 5 dargestellt. In einem Bild dieses Objektes 24 kann beispielsweise ein Mittelpunkt 24a bestimmt werden. Hierbei ist es beispielsweise möglich, ein Human Skeleton Modell zu verwenden. Ausgehend von dem Bild des Objektes 24 kann ein Skelettmodell errechnet werden und diesem Skelettmodell kann ein Mittelpunkt 24a zugeordnet werden.

Auch mit Hilfe eines sogenannten Background Subtraction Verfahrens lässt sich das Objekt 24 in dem Bild separieren. Anschließend kann ein Mittelpunkt der Fläche des separierten Objekts 24 berechnet werden, welcher als Mittelpunkt 24a des Objekts 24 bestimmt wird. Andere Verfahren zur Bestimmung des Mittelpunkts 24a des Objekts 24 sind ebenfalls möglich. Gegenständlich wird insbesondere die Position des Mittelpunkts 24a des Objekts 24 bestimmt.

Hierzu kann an dem Objekt 24 ein Mobilgerät 26, wie dies in Fig. 6 gezeigt ist, mitgeführt werden. Das Mobilgerät 26 kann dabei beispielsweise ein Smartphone, ein Tabletcomputer, eine Datenbrille oder dergleichen sein. Das mobile Gerät 26 ist in Funkverbindung 28 mit einer Zentrale 30. Die Funkverbindung kann beispielsweise WLAN, ZigBee, LON, Lemonbeat, UMTS, LTE, 5G oder dergleichen sein. Das Mobilgerät 26 kann einen eingebauten Beschleunigungssensor und/oder Neigungssensor aufweisen und die damit erfassten Bewegungsinformationen können über die Funkverbindung 28 an die Zentrale 30 übermittelt werden.

Auf den mobilen Gerät 26 kann eine Applikation laufen, die beispielsweise von der Zentrale 30 über die Mobilfunkverbindung 28 ausgelöst oder angesteuert werden kann. Auch kann von der Zentrale 30 eine Positionsinformation über die Funkverbindung 28 an das mobile Gerät 26 übermittelt werden.

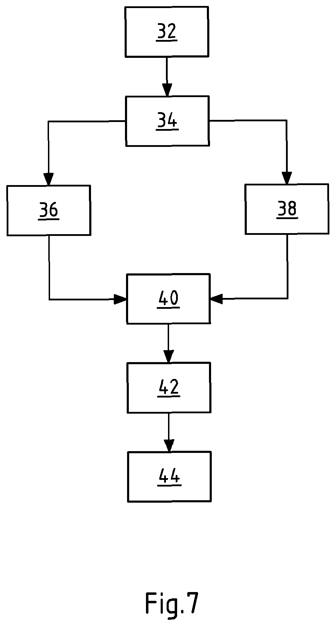

Insbesondere wenn auf den mobilen Gerät 26 ein Applikationsprogramm läuft, welches Augmented Reality unterstützt, ist für diese Anwendung eine exakte Positionsbestimmung hilfreich. Eine solche exakte Positionsbestimmung kann gemäß eines Verfahrens nach Fig. 7 erfolgen.

Tritt beispielsweise eine Person in ein Ladenlokal und ist ein Applikationsprogramm auf ihrem mobilen Gerät 26 gestartet, welches Augmented Reality unterstützt, so kann diese Applikation in einem Schritt 32 eine Information an die Zentrale 30 übermitteln, dass eine Positionsinformation angefordert wird.

Daraufhin aktiviert die Zentrale 30 in einem Schritt 34 die Positionsbestimmung. Hierzu wird über die Funkverbindung 28 im Schritt 36 die Applikation auf dem mobilen Gerät 26 instruiert, Bewegungsinformationen zu übermitteln und/oder Lichtinformationen auszusenden. Insbesondere kann eine Identifikationsinformation moduliert werden und entsprechend dieser Modulation kann eine Lichtinformation von dem mobilen Gerät 26 ausgesendet werden. Auch ist es auch möglich, dass Bewegungsinformationen von dem mobilen Gerät 26 an die Zentrale 30 übermittelt werden.

Gleichzeitig kann in einem Schritt 38 eine Bilderfassung durchgeführt werden. Dabei werden die Kameras 10 angesteuert, so dass sie Objekte in ihren Bildern detektieren. An den detektierten Objekten können Bewegungen bestimmt werden und/oder Variationen in den Helligkeitsinformationen.

In einem Schritt 40 können die Bewegungsinformationen von dem mobilen Gerät 26 mit den Bewegungsinformationen verschiedenster Objekte in den Bildern von den Kameras 10 korreliert werden. Durch eine Kreuzkorrelation dieser Bewegungsinformationen kann festgestellt werden, an welchem Objekt auf einem Bild einer Kamera 10 das mobile Gerät 26 angeordnet ist. Da die Bewegungsinformationen auf dem Bild zumindest zeitlich mit der Bewegungsinformation des mobilen Geräts 26 korrelieren muss, kann das Objekt bestimmt werden, an welchem das mobile Gerät 26 geführt wird.

Alternativ oder zusätzlich können Helligkeitsinformationen ausgewertet werden. Ist eine Kennung beispielsweise moduliert, kann in dem Bild detektiert werden, an welchem Objekt eine entsprechende Information moduliert ausgesendet wurde. Insbesondere ist es möglich, eine zeitliche Korrelation der Variation der Lichtinformation in dem Bild und der Variation der Lichtinformation auf dem mobilen Gerät 26 herzustellen und darüber festzustellen, welches des in dem Bild erkennbare Objekte das mobile Gerät 26 bei sich trägt.

Nachdem im Schritt 40 das Objekt erkannt wurde, welches das Mobilgerät 26 trägt, wird im Schritt 42 eine Positionsbestimmung entsprechend den Ausführungen gemäß den Fig. 4a-c durchgeführt. Hierbei werden die Azimute des bestimmten Objekts durch die Kameras 10 bestimmt und die absoluten Positionen $x_x$, $y_x$ des Objekts 24 bestimmt.

Anschließend kann in dem Schritt 44 diese Positionsinformation über die Funkverbindung 28 an das Mobilgerät 26 übermittelt werden und dort für die Augmented Reality Anwendung nutzbar gemacht werden.

**Bezugszeichenliste**

| | |
|---|---|
| 2 | Hemisphäre |
| 4 | Meridian |
| 6 | Optische Achse |
| 8 | Äquatorebene |
| 10 | Kamera |
| 14 | Blickwinkel |
| 16, 18 | Achse |
| 20 | Raum |
| 22 | Referenzpunkt |
| 24 | Objekt |
| 24a | Objektmittelpunkt |
| 26 | Mobiles Gerät |
| 28 | Funkverbindung |

30       Zentraler Rechner
32       Aktivierung
34       Objekterkennung
36       Erfassen von Bewegungsinformationen oder Aussenden von Lichtinformationen
38       Auswerten von Bildinformationen
40       Korrelieren von Bildinformationen und Bewegungsinformationen/Lichtinformationen
42       Bestimmen eines Azimuts und Zuordnen einer Position zu einem Objekt
44       Aussenden der Positionsinformation

**Patentansprüche**

1. Verfahren zur Bestimmung einer Position eines Objektes (24) in zumindest einer Ebenes eines Raums, insbesondere in einem Ladenlokal, umfassend:

   - Erfassen jeweils eines Bildes des Raums durch zumindest zwei Kameras (10), wobei ein jeweiliges Bild eine Azimutalprojektion einer Hemisphäre auf die Bildebene ist,
   - Bestimmen eines Azimuts des Objektes (24) in einem jeweiligen Bild, wobei sich durch die Azimutalprojektion jedem Azimut der Bildebene ein Azimut der Objektebene zuordnen lässt und aus dem Azimut der Bildkoordinaten der Azimut der Objektkoordinaten bestimmt wird,
   - Zuordnen der Position zu dem Objekt (24) unter Verwendung des bestimmten Azimuts des Objektes (24) und einer Position von zumindest zwei zuvor bestimmten Referenzpunkten (22), wobei
   - an dem Objekt (24) ein mobiles Gerät (26) angeordnet ist und das mobile Gerät (26) Bewegungsinformationen erfasst und die erfassten Bewegungsinformationen versendet und
   - in dem Bild zunächst zumindest zwei Objekte (24) bestimmt werden, anschließend anhand von Bewegungsinformationen eines der Objekte (24), welche von dem Objekt (24) empfangen werden und anhand von Bewegungsinformationen der Objekte (24) welche in dem Bild detektiert werden, dasjenige Objekt (24) bestimmt wird, von dem die Bewegungsinformationen empfangen wurde,
   **dadurch gekennzeichnet,**
   - **dass** Objektmittelpunkte der Objekte (24) mit einem Objekterkennungsverfahren erkannt werden.

2. Verfahren nach Anspruch 1,
   **dadurch gekennzeichnet,**

   - **dass** eine jeweilige Kamera (10) kalibriert wird, in dem eine jeweilige Position von zumindest zwei Referenzpunkten (22) in der Ebene erfasst wird, wobei eine jeweilige Position eines Referenzpunktes (22) relativ zu jeweils einer von zumindest zwei Kameras (10) bemaßt ist.

3. Verfahren nach Anspruch 1 oder 2,
   **dadurch gekennzeichnet,**

   - **dass** die Azimutalprojektion eine Zentralprojektion, insbesondere eine gnomonische Projektion ist.

4. Verfahren nach einem der vorangehenden Ansprüche,
   **dadurch gekennzeichnet,**

   - **dass** eine Elevation der Objektkoordinaten in einen Radius der Bildkoordinaten projiziert wird.

5. Verfahren nach einem der vorangehenden Ansprüche,
   **dadurch gekennzeichnet,**

   - eine Elevation des Objektes (24) in einem jeweiligen Bild bestimmt wird,
   - dass die Position zu dem Objekt (24) unter Verwendung der bestimmten Elevation des Objektes zugeordnet wird.

6. Verfahren nach einem der vorangehenden Ansprüche 4 und 5,
   **dadurch gekennzeichnet,**

   - mit Hilfe des Azimuts und der Elevation des Objektes (24) ein Raumvektor ausgehend von jeweils einer der Kameras bestimmt wird.

7. Verfahren nach einem der vorangehenden Ansprüche 4 bis 6,
**dadurch gekennzeichnet,**

- ein minimaler Abstand zwischen zwei Raumvektoren bestimmt wird und dass insbesondere der Abstand in ein Verhältnis zu den jeweiligen Elevationen der Raumvektoren gesetzt wird.

8. Verfahren nach einem der vorangehenden Ansprüche,
**dadurch gekennzeichnet,**

- **dass** die optische Achse der Kamera (10) im Wesentlichen parallel zur Flächennormalen der Ebene ist, in der die Position des Objektes bestimmt wird.

9. Verfahren nach einem der vorangehenden Ansprüche,
**dadurch gekennzeichnet,**

- **dass** die optischen Achsen der Kameras (10) im Wesentlichen parallel zueinander ausgerichtet werden.

10. Verfahren nach einem der vorangehenden Ansprüche 2 bis 9,
**dadurch gekennzeichnet,**

- **dass** die Position des Referenzpunktes (22) als Abstand des Objektes (24) von der optischen Achse einer jeweiligen Kamera (10) bestimmt wird, wobei insbesondere der Abstand entlang zweier zur optischen Achse der Kamera (10) im Wesentlichen orthogonalen Achsen bestimmt wird.

11. Verfahren nach einem der vorangehenden Ansprüche,
**dadurch gekennzeichnet,**

- **dass** der Azimut und/oder die Elevation des Objektes (24) in Bildern von zumindest zwei Kameras (10) bestimmt werden.

12. Verfahren nach einem der vorangehende. Ansprüche,
**dadurch gekennzeichnet,**

- **dass** mit Hilfe des mobilen Gerätes (26) zunächst ein Ortsbereich bestimmt wird, dass der Ortsbereich von dem mobilen Geräte (26) ausgesendet wird und dass in dem Bild nur der Ortsbereich zur Positionsbestimmung ausgewertet wird.

13. Verfahren nach einem der vorangehenden Ansprüche,
**dadurch gekennzeichnet,**

- **dass** an dem mobilen Gerät (26) Lichtinformationen ausgesendet werden, das in dem Bild detektierte Lichtinformationen ausgewertet werden und dass dasjenige Objekt (24) bestimmt wird, an welchem die Lichtinformationen detektiert wurden.

14. Verfahren nach einem der vorangehenden Ansprüche,
**dadurch gekennzeichnet,**

- die Position des Objektes (24) an das mobile Gerät (26) gesendet wird.

15. System zur Bestimmung einer Position eines Objektes in zumindest einer Ebene eines Raums, insbesondere in einem Ladenlokal, mit einem Verfahren nach einem der vorangehenden Ansprüche umfassend:

- zumindest zwei Kameras (10) eingerichtet zum Erfassen jeweils eines Bildes des Raums, wobei ein jeweiliges Bild eine Azimutalprojektion einer Hemisphäre auf die Bildebene ist,
- eine Auswerteeinrichtung eingerichtet zum Bestimmen eines Azimuts des Objektes (24) in einem jeweiligen Bild,

- eine Zuordnungseinrichtung eingerichtet zum Zuordnen der Position zu dem Objekt (24) unter Verwendung des bestimmten Azimuts des Objektes (24) und einer Position von zumindest zwei zuvor bestimmten Referenzpunkten (22).

16. System nach Anspruch 15,
**dadurch gekennzeichnet,**

- **dass** Auswerteeinrichtung und/oder die Zuordnungseinrichtung in zumindest einer der Kameras (10) oder in einem zentralen Rechner angeordnet sind.

**Claims**

1. Method for determining a position of an object (24) in at least one plane of a space, in particular in a store, comprising:

- capturing in each case one image of the space by at least two cameras (10),
- wherein each respective image is an azimuthal projection of a hemisphere onto the image plane,
- determining an azimuth of the object (24) in a respective image,
- wherein the azimuthal projection allows an azimuth of the object plane to be assigned to each azimuth of the image plane, and the azimuth of the object coordinates is determined from the azimuth of the image coordinates,
- assigning the position to the object (24) using the determined azimuth of the object (24) and a position of at least two previously determined reference points (22),
- wherein a mobile device (26) is arranged on the object (24) and the mobile device (26) detects movement information and transmits the detected movement information, and
- at least two objects (24) are first determined in the image, then, based on movement information of one of the objects (24) which is received from the object (24) and based on movement information of the objects (24) which is detected in the image, that object (24) is determined from which the movement information was received,
**characterized in that**
- object centers of the objects (24) are recognized using an object recognition method.

2. Method according to claim 1, **characterized in that** a respective camera (10) is calibrated **in that** a respective position of at least two reference points (22) in the plane is detected, wherein a respective position of a reference point (22) is measured relative to a respective one of at least two cameras (10).

3. Method according to claim 1 or 2, **characterized in that** the azimuthal projection is a central projection, in particular a gnomonic projection.

4. Method according to one of the preceding claims, **characterized in that** an elevation of the object coordinates is projected into a radius of the image coordinates.

5. Method according to one of the preceding claims, **characterized in that** an elevation of the object (24) is determined in a respective image, and the position is assigned to the object (24) using the determined elevation of the object.

6. Method according to one of the preceding claims 4 and 5, **characterized in that** a spatial vector is determined from each of the cameras (10) using the azimuth and the elevation of the object (24).

7. Method according to one of the preceding claims 4 to 6, **characterized in that** a minimum distance between two spatial vectors is determined and, in particular, the distance is set in relation to the respective elevations of the spatial vectors.

8. Method according to one of the preceding claims, **characterized in that** an optical axis of the camera (10) is essentially parallel to a surface normal of the plane in which the position of the object is determined.

9. Method according to one of the preceding claims, **characterized in that** optical axes of the cameras (10) are aligned substantially parallel to each other.

10. Method according to one of the preceding claims 2 to 9, **characterized in that** the position of the reference point (22) is determined as the distance of the object (24) from an optical axis of a respective camera (10), wherein in particular the distance is determined along two axes which are substantially orthogonal to the optical axis of the camera (10).

11. Method according to one of the preceding claims, **characterized in that** the azimuth and/or the elevation of the object (24) are determined in images from at least two cameras (10).

12. Method according to one of the preceding claims, **characterized in that** with the aid of the mobile device (26) a location area is first determined, that the location area is transmitted by the mobile device (26), and that only the location area is evaluated in the image for position determination.

13. Method according to one of the preceding claims, **characterized in that** light information is transmitted at the mobile device (26), that light information detected in the image is evaluated, and that that object (24) is determined at which the light information was detected.

14. Method according to one of the preceding claims, **characterized in that** the position of the object (24) is sent to the mobile device (26).

15. System for determining a position of an object in at least one plane of a space, in particular in a store, with a method according to one of the preceding claims, comprising at least two cameras (10) configured to capture in each case one image of the space, wherein each respective image is an azimuthal projection of a hemisphere onto the image plane, an evaluation device configured to determine an azimuth of the object (24) in a respective image, an assignment device configured to assign the position to the object (24) using the determined azimuth of the object (24) and a position of at least two previously determined reference points (22).

16. System according to claim 15, **characterized in that** the evaluation device and/or the assignment device are arranged in at least one of the cameras (10) or in a central computer.

**Revendications**

1. Méthode pour déterminer une position d'un objet (24) dans au moins un plan d'un espace, notamment dans un magasin, comprenant :

   - capturer une image respective de l'espace par au moins deux caméras (10), où une image respective est une projection azimutale d'un hémisphère sur le plan de l'image,
   - déterminer un azimut de l'objet (24) dans une image respective, où, par la projection azimutale, chaque azimut du plan de l'image peut être associé à un azimut du plan de l'objet et l'azimut des coordonnées d'objet est déterminé à partir de l'azimut des coordonnées d'image,
   - attribuer la position à l'objet (24) en utilisant l'azimut déterminé de l'objet (24) et une position d'au moins deux points de référence (22) déterminés au préalable,
   où
   - un dispositif mobile (26) est disposé sur l'objet (24) et le dispositif mobile (26) capte des informations de mouvement et transmet les informations de mouvement captées, et
   - au moins deux objets (24) sont d'abord déterminés dans l'image, puis, sur la base d'informations de mouvement de l'un des objets (24), qui sont reçues de l'objet (24), et basé sur des informations de mouvement des objets (24) détectés dans l'image, l'objet (24) dont les informations de mouvement ont été reçues est déterminé,
   **caractérisée en ce que,**
   - les centres d'objet des objets (24) sont reconnus à l'aide d'une méthode de reconnaissance d'objets.

2. Méthode selon la revendication 1,
   **caractérisée en ce,**

   - **qu'**une caméra (10) respective est calibrée en capturant une position respective d'au moins deux points de référence (22) dans le plan, où une position respective d'un point de référence (22) est dimensionnée par rapport à une respective d'au moins deux caméras (10).

3. Méthode selon la revendication 1 ou 2,
   **caractérisée en ce,**

- **que** la projection azimutale est une projection centrale, en particulier une projection gnomonique.

4. Méthode selon l'une des revendications précédentes,
   **caractérisée en ce,**

   - **que** une élévation des coordonnées d'objet est projetée dans un rayon des coordonnées d'image.

5. Méthode selon l'une des revendications précédentes,
   **caractérisée en ce,**

   - **qu'**une élévation de l'objet (24) est déterminé dans une image respective,
   - **que** la position à l'objet (24) est attribuée en utilisant l'élévation déterminée de l'objet.

6. Méthode selon l'une des revendications 4 et 5,
   **caractérisée en ce,**

   - **qu'**un vecteur spatial est déterminé depuis chacune des caméras à l'aide de l'azimut et de l'élévation de l'objet (24).

7. Méthode selon l'une des revendications 4 à 6,
   **caractérisée en ce,**

   - **qu'**une distance minimale entre deux vecteurs spatiaux est déterminée et, en particulier, la distance est mise en rapport avec les élévations respectives des vecteurs spatiaux.

8. Méthode selon l'une des revendications précédentes,
   **caractérisée en ce,**

   - **que** l'axe optique de la caméra (10) est essentiellement parallèle à la normale de surface du plan dans lequel la position de l'objet est déterminée.

9. Méthode selon l'une des revendications précédentes,
   **caractérisée en ce,**

   - **que** les axes optiques des caméras (10) sont orientées essentiellement parallèlement l'un à l'autre.

10. Méthode selon l'une des revendications 2 à 9,
    **caractérisée en ce,**

    - **que** la position du point de référence (22) est déterminée comme une distance de l'objet (24) à l'axe optique d'une caméra (10) respective, où, en particulier, la distance est déterminée selon deux axes essentiellement orthogonaux à l'axe optique de la caméra (10).

11. Méthode selon l'une des revendications précédentes,
    **caractérisée en ce,**

    - l'azimut et/ou l'élévation de l'objet (24) sont déterminés dans des images d'au moins deux caméras (10).

12. Méthode selon l'une des revendications précédentes,
    **caractérisée en ce,**

    - **que** d'abord une zone de localisation est déterminée à l'aide du dispositif mobile (26), que la zone de localisation est transmise par le dispositif mobile (26), et que dans l'image seulement la zone de localisation est évaluée pour déterminer la position.

13. Méthode selon l'une des revendications précédentes,
    **caractérisée en ce,**

- **que** des informations lumineuses sont transmises au niveau du dispositif mobile (26), les informations lumineuses détectées dans l'image sont évaluées, et que l'objet (24) au niveau duquel les informations lumineuses ont été détectées est déterminé.

14. Méthode selon l'une des revendications précédentes,
**caractérisée en ce,**

- **que** la position de l'objet (24) est transmise au dispositif mobile (26).

15. Système pour déterminer une position d'un objet dans au moins un plan d'un espace, en particulier dans un magasin, avec une méthode selon l'une des revendications précédentes, comprenant :

- au moins deux caméras (10) configurées pour capturer une image respective de l'espace, où une image respective est une projection azimutale d'un hémisphère sur le plan de l'image,
- une unité d'évaluation configurée pour déterminer un azimut de l'objet (24) dans une image respective,
- une unité d'attribution configurée pour attribuer la position à l'objet (24) en utilisant l'azimut déterminé de l'objet (24) et une position d'au moins deux points de référence (22) déterminés au préalable.

16. Système selon la revendication 15,
**caractérisé en ce que,**

- l'unité d'évaluation et/ou l'unité d'attribution sont disposées dans au moins l'une des caméras (10) ou dans un ordinateur central.

Fig.1a

Fig.1b

Fig.2

Fig.3

Fig.4a

Fig.4b

Fig.4c

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140043444 A1